# EUROPEAN PATENT APPLICATION

(11) **EP 4 745 036 A1**
(43) Date of publication of application: **20.05.2026**
(21) Application number: 25216431.4
(22) Date of filing: 17.11.2025
(51) Int. Cl.: B64D 13/06, B64D 33/08

(54) **SYSTEM FOR PRE-COOLING AIR SUPPLIED TO AN AIRCRAFT ENVIRONMENTAL CONTROL SYSTEM**

(30) Priority: 15.11.2024 US 202418948637
(71) Applicant: Pratt & Whitney Canada Corp., (01BE5) Longueuil, QC J4G 1A1 (CA)
(72) Inventor: SGOUROMITIS, John, (01BE5) Longueuil, J4G 1A1 (CA); TREPANIER, Richard, (01BE5) Longueuil, J4G 1A1 (CA); HERNANDEZ, Guillermo, (01BE5) Longueuil, J4G 1A1 (CA)
(74) Representative: Dehns

(57) **Abstract**

A system for feeding pre-cooled air to an aircraft environmental control system (ECS) (28) comprises an aircraft engine (16) including a compressor section (20) having a bleed port, and an engine oil circuit including an oil cooler (25) for cooling engine oil. The system further includes an air pre-cooler (34) including an air passage (38) in heat exchange relationship with a coolant passage (36). The air passage (38) has an air inlet (38a) fluidly connected to the bleed port of the compressor section (20) and an air outlet (38b) fluidly connected to an inlet (32) of the ECS (28). The coolant passage (36) has a coolant inlet (36a) fluidly connected to an oil outlet of the oil cooler (25) and a coolant outlet (36b) fluidly connected to the engine oil circuit at a location upstream of the oil cooler (25).

## Description

### TECHNICAL FIELD

The application relates generally to aircrafts and, more particularly, to a system for feeding pre-cooled compressor bleed air to an environmental control system (ECS) of an aircraft.

### BACKGROUND OF THE ART

ECS provides air supply, thermal control and cabin pressurization for the crew and passengers of an aircraft. In flight, air may be supplied to the ECS by being bled from the compressor section of an engine of the aircraft. In some applications, the temperature of the compressor bleed air may require cooling prior to being routed to the ECS. While existing systems for cooling service bleed air have various benefits, there is still room in the art for improvement.

### SUMMARY

According to one aspect of the present invention, there is provided a system for feeding pre-cooled air to an environmental control system (ECS) of an aircraft, the system comprising: an aircraft engine comprising: a compressor section having a bleed port; and an engine oil circuit including an oil cooler for cooling engine oil; and an air pre-cooler including an air passage in heat exchange relationship with a coolant passage, the air passage having an air inlet fluidly connected to the bleed port of the compressor section of the aircraft engine and an air outlet fluidly connectable to an inlet of the ECS, the coolant passage having a coolant inlet fluidly connected to an oil outlet of the oil cooler and a coolant outlet fluidly connected to the engine oil circuit at a location upstream of the oil cooler.

Optionally, and in accordance with the above, the coolant passage of the air pre-cooler is disposed downstream of the oil cooler of the aircraft engine relative to a flow of the engine oil through the engine oil circuit.

Optionally, and in accordance with any of the above, the aircraft engine is installed inside an engine nacelle, and wherein the air pre-cooler is disposed inside the engine nacelle.

Optionally, and in accordance with any of the above, the air pre-cooler is mounted to the aircraft engine inside the engine nacelle.

Optionally, and in accordance with any of the above, the oil cooler is an air-cooled oil cooler (ACOC) having an air passage fluidly connected to an air intake defined in the engine nacelle for receiving a flow of ambient air.

Optionally, and in accordance with any of the above, ducting extends from the air outlet of the air pre-cooler to the ECS, the ducting configured to extend through a wing of the aircraft.

According to another aspect of the present invention, there is provided an aircraft comprising: a fuselage and wings extending from opposed sides of the fuselage; one or more aircraft engines mounted to the wings, the one or more aircraft engines including a first engine disposed inside an engine nacelle mounted to a first wing of the wings, the first engine including: a compressor section having a bleed port, and an engine oil circuit including an oil cooler for cooling engine oil; an environmental control system (ECS) fluidly connected to the bleed port via ducting extending through the first wing of the aircraft; and an air pre-cooler having an air passage in heat exchange relationship with a coolant passage, the air passage of the air pre-cooler fluidly connected to the bleed port and the ducting in the first wing of the aircraft, the air passage of the air pre-cooler disposed downstream of the bleed port and upstream of the ducting in the first wing relative to a flow of bleed air from the bleed port to the ECS, the coolant passage of the air pre-cooler having an inlet fluidly connected to an oil outlet of an oil passage of the oil cooler and an outlet for returning the engine oil to the first engine.

Optionally, and in accordance with any of the above, the air pre-cooler is mounted to a casing of the first engine inside the engine nacelle.

Optionally, and in accordance with any of the above, a fuel tank is disposed at least in part in the first wing, the ducting disposed in front of the fuel tank inside the first wing (relative to the usual motion of the aircraft in flight), i.e. the ducting is located between the leading edge of the wing and the fuel tank.

Optionally, and in accordance with any of the above, the ducting is disposed in a leading edge region of the first wing.

Optionally, and in accordance with any of the above, the oil cooler is an air-cooled oil cooler (ACOC) having an air passage fluidly connected to an air intake defined in the engine nacelle.

Optionally, and in accordance with any of the above, the ACOC and the air pre-cooler are disposed on opposed sides of the first engine inside the engine nacelle.

According to another aspect of the present invention, there is provided a method of supplying bleed air from a compressor section of an aircraft engine to an environmental control system (ECS) of an aircraft, the method comprising: using engine oil as a coolant to cool down the bleed air drawn from the compressor section of the aircraft engine to obtain pre-cooled air; and then ducting the pre-cooled air through an airframe structure of the aircraft and to the ECS.

Optionally, and in accordance with any of the above, the pre-cooled air is obtained by circulating the bleed air drawn from the compressor section through a pre-cooler installed within a nacelle of the aircraft engine.

Optionally, and in accordance with any of the above, the pre-cooler is an oil-cooled air cooler, and wherein the method comprises directing the bleed air from the compressor section of the aircraft engine to the oil-cooled air cooler and then through ducting extending through the airframe structure of the aircraft.

Optionally, and in accordance with any of the above, the airframe structure is an aircraft wing, and wherein the directing the bleed air through the ducting comprises directing the pre-cooled air from the oil-cooled air cooler through the aircraft wing.

Optionally, and in accordance with any of the above, the method comprises cooling the engine oil prior to directing the engine oil to the pre-cooler.

Optionally, and in accordance with any of the above, the cooling the engine oil prior to directing the engine oil to the pre-cooler comprises passing the engine oil through an air-cooled oil cooler upstream of the pre-cooler.

Optionally, and in accordance with any of the above, the method comprises directing the engine oil from an engine component to the air-cooled oil cooler.

Optionally, and in accordance with any of the above, the method comprises circulating ambient air through the air-cooled oil cooler.

### DESCRIPTION OF THE DRAWINGS

Reference is now made to the accompanying figures in which:
Fig. 1 is a schematic view of an aircraft; and
Fig. 2 is a schematic view of a system of the aircraft including an aircraft engine having an air-cooled oil cooler (ACOC) connected in series to an oil-cooled air cooler (OCAC) for pre-cooling compressor bleed air prior to supplying the bleed air to an environmental control system (ECS) of the aircraft.

### DETAILED DESCRIPTION

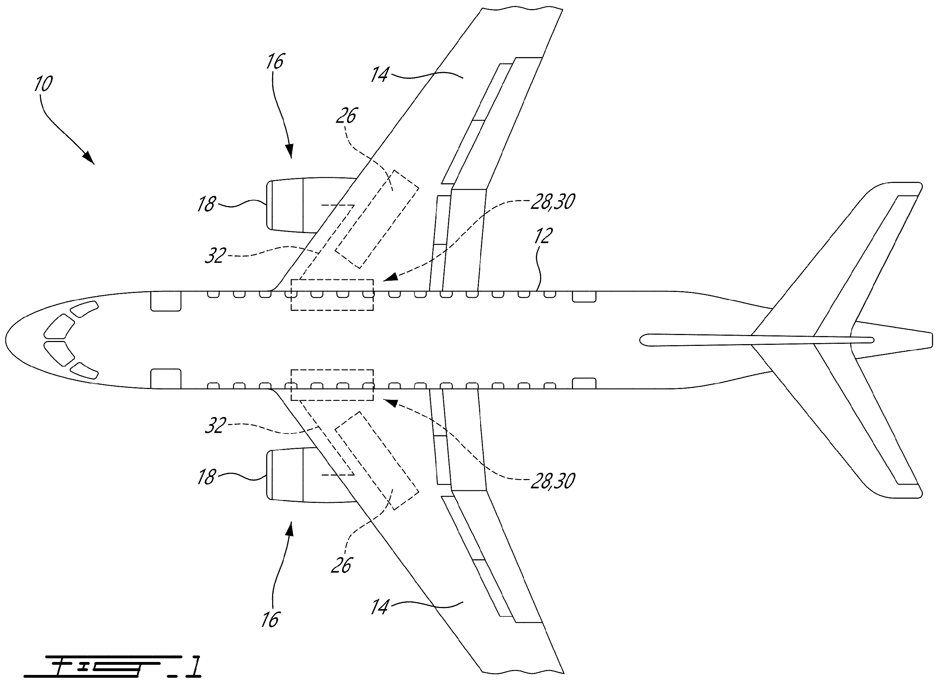

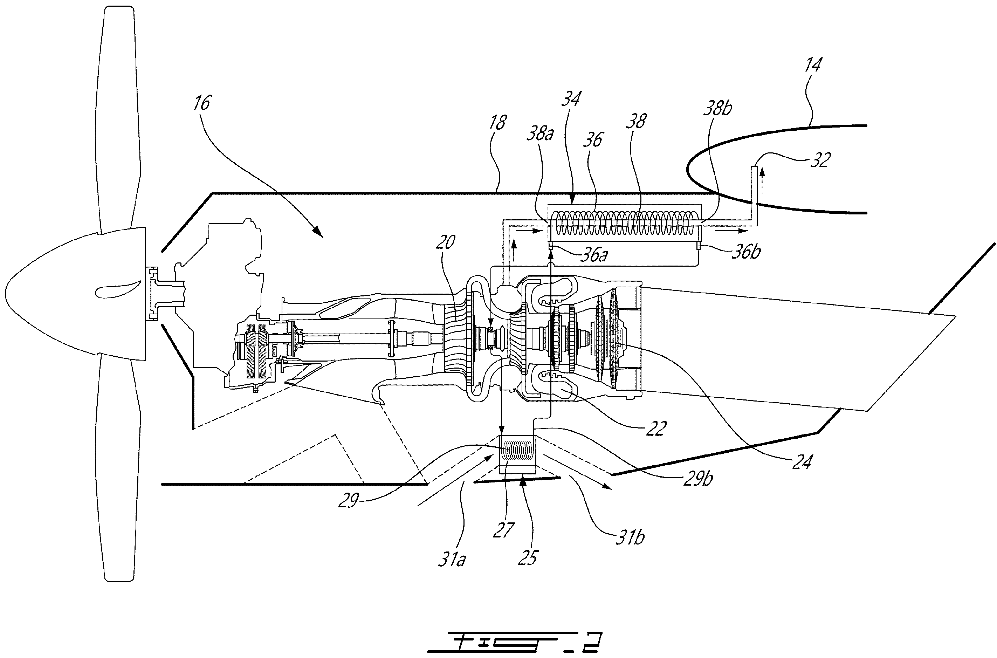

Fig. 1 illustrates an aircraft 10 having a fuselage 12 and wings 14 attached to the fuselage 12. The aircraft 10 has a propulsion system configured to produce the propulsive thrust required to propel the aircraft 10 in flight. The propulsion system comprises one or more aircraft engines 16 located in respective engine nacelles 18 attached to each wing 14. As shown in Fig. 2, each aircraft engine 16 may be provided in the form of a gas turbine engine comprising in serial flow communication a compressor section 20 for pressurizing the air, a combustor 22 in which the compressed air is mixed with fuel and ignited for generating an annular stream of hot combustion gases, and a turbine section 24 for extracting energy from the combustion gases. While the exemplified engine is shown to be a turboprop gas turbine engine, the present disclosure is also directed to other engine types, such as turbofan and turboshaft engines, as well as hybrid electric engines.

The aircraft engine 16 further comprises a lubrication system for lubricating and cooling engine components, such as bearings and other rotary components. For instance, the lubrication system may include an engine oil circuit including various components, such as pumps, nozzles, and ducting, to circulate oil to the engine components and back to an oil tank (not shown). As shown in Fig. 2, such an engine oil circuit further comprises a heat exchanger or oil cooler 25 for cooling the oil received from the engine components. According to some embodiments, the oil cooler 25 is provided in the form of an air-cooled oil cooler (ACOC) mounted inside the engine nacelle 18. The ACOC has an air passage 27 in heat exchange relationship with an oil passage 29. The air passage 27 is fluidly connected in series between an air intake 31a and an air exhaust 31b defined in the engine nacelle 18 for respectively receiving and exhausting ambient air used as a coolant to cool down the engine oil as it flows through the oil passage 29 of the oil cooler 25.

Referring back to Fig. 1, it can be seen that the aircraft 10 further comprises a fuel storage system for storing one or more types of fuels for used in the propulsion system (i.e., the aircraft engines 16). The fuel storage system includes one or more fuel tanks 26 at least partly located in the wings 14 of the aircraft 10. The aircraft 10 further comprises an environmental control system (ECS) 28 for providing conditioned air to pressurized the cabin of the aircraft 10 and regulate the temperature and humidity throughout the cabin. The ECS 28 may also be used to supply cooling air into avionics bay(s) to prevent electronic equipment from overheating. The ECS 28 comprises one or more air conditioning (AC) packs 30, which are composed of multiple sub-systems including heat exchangers, valves, compressors, turbines, water separators, etc. The AC packs 30 are configured to condition the air so as to regulate the temperature and flow of air to the cabin. The location of the AC packs 30 depends on the design of the aircraft. In some designs, the AC packs 30 are installed in the wing-to-body fairing between the wings 14 beneath the fuselage 12. That is at the root of the wings 14 where the wings 14 are attached to the aircraft fuselage 12.

In flight, air is supplied to the ECS 28 by being bled from a compressor stage (e.g., P3 stage) of one or more of the aircraft engines 16, upstream from the combustors 22 thereof. Ducts 32 extend through the wings 14 along the leading edge region of the wings 14 to fluidly connect the AC pack(s) 30 and, thus, the ECS 28 to one or more of the aircraft engines 16, and, more particularly, to bleed air ports provided at selected compressor stage locations on the engines 16.

The temperature and mass flow rate of the bleed air drawn from the compressor section 20 of the engines 16 to feed the ECS 28 varies according to which compressor stage is used, and the power settings of the engines 16. Compressor bleed air, such as P3 air, may be at temperatures as high as 800 °F (427 °C). The flow of such high energy, high temperature air through the ducts 32 raises some safety concerns as the ductwork passes in the vicinity of the wing fuel tanks 26 and, thus, may constitute a fire hazard. Also, under certain circumstances, for instance in the event of a leak, the high temperature bleed air flowing though the wing ducts 32 could potentially compromise the integrity of the airframe structure of the aircraft, notably the structure of the wings 14. For safety considerations and compliance with airworthiness regulations, the air bled from the compressor section 20 of each engine 16 is thus pre-cooled to an acceptable temperature (e.g., around 200 °F (93 °C)) in the engine nacelle 18 prior to entering the ducts 32 in the wings 14 en-route to the AC packs 30.

To achieve the desired temperature, the bleed-air is passed through a heat exchanger herein referred to as an air pre-cooler 34. As shown in Fig. 2, the air pre-cooler 34 is mounted inside the nacelle 18 to cool down the service bleed air prior to entering the wing ducts 32. The air pre-cooler 34 is integrated to an engine fluid system of the engine 16. For instance, the air pre-cooler 34 can be integrated to the engine oil circuit to allow engine oil to be used as a coolant to cool down the bleed air upstream of the wing ducts 32. Using available engine fluid, such as the engine oil, as a coolant for the bleed air supplied to the ECS 28 of the aircraft 10 eliminates the need to integrate a dedicated source of coolant (e.g., air) to the engine nacelle 18. As compared to air-cooled air coolers, an engine fluid cooled system provides for a more compact heat exchanger arrangement. Indeed, the use of the engine oil as a coolant for the bleed air eliminates the needs for additional air intake and exhaust ducts, which may contribute to reduce drag. The elimination of additional air ducting also provides better accessibility to the engine 16 inside the nacelle 18 and, thus, contributes to reduce downtime when engine maintenance operations are required.

As shown in Fig. 2, the integration of the ECS air pre-cooler 34 to an engine fluid system of the engine 16, can be achieved by configuring the air pre-cooler 34 as an oil-cooled air cooler (OCAC) and by fluidly connecting such OCAC to the engine oil circuit downstream of the engine oil cooler 25. Still referring to Fig. 2, it can be seen that the air pre-cooler 34 has a coolant passage 36 having an inlet 36a fluidly connected to an outlet 29b of the oil passage 29 of the engine oil cooler 25. The coolant passage 36 of the air pre-cooler 34 has an outlet 36b fluidly connected to the engine oil circuit to return the engine oil back to the engine 16 upstream of the oil cooler 25. The air pre-cooler 34 further comprises an air passage 38 having an inlet 38a fluidly connected to a bleed port of the compressor section 20 of the engine 16 and an outlet 38b fluidly connected to the wing ducts 32. In operation, the engine oil flowing through the coolant passage 36 of the air pre-cooler 34 cools down the compressor bleed air flowing through the air passage 38. In this way, the bleed air can be cooled down to an acceptable temperature (e.g., around 200 °F (93 °C)) upstream of the ducts 32 in the aircraft wings 14. The volume of oil of the engine oil circuit is selected to provide the desired cooling capacity. According to some applications, in order to provide sufficient cooling to the bleed air fed to the ECS 28, the quantity of oil in the engine oil circuit may need to be increased to an amount greater than the amount of oil that would otherwise be required for the engine needs.

According to some embodiments, the air pre-cooler 34 may be mounted directly to the outer case of the engine 16 in the space between the engine case and the engine nacelle 18. For instance, the air pre-cooler 34 may be disposed on a side of the engine case opposite to the oil cooler 25. According to other embodiments, the air pre-cooler 34 may be mounted to the nacelle 18 as closed as possible to the engine 16 to minimize ductwork and promote compactness.

In operation, a flow of engine oil is directed from an oil source (e.g., an oil tank) to one or more engine components (e.g., a bearing). Then, the oil is directed from the engine component to the oil cooler 25. As the oil flows through the oil passage 29 of the oil cooler 25, it is cooled down to a desired temperature by the flow of ambient air flowing through the air passage 27. The heated air is exhausted through the air exhaust 31b defined in the engine nacelle 18. The cooled oil is directed from the oil cooler 25 to the air pre-cooler 34 where it is used to cool down the bleed air drawn from the compressor section 20 of the aircraft engine 16. The engine oil flowing through the coolant passage 36 of the air pre-cooler 34 cools down the bleed air flowing through the air passage 38 of the air pre-cooler 34. The air pre-cooler 34 is configured to maximize heat extraction from the bleed air. For instance, the air pre-cooler can have a matrix-type heat exchanger configuration. The pre-cooled air is then directed into the wing ducts 32 to feed the AC packs 30 of the aircraft ECS 28. By so cooling the bleed air upstream of the airframe structure inside the engine nacelle 18, the integrity of the aircraft structure can be protected. The engine oil from the coolant passage 36 of the air pre-cooler 34 is returned back to the engine 16 via suitable oil conduits to thereby complete the oil circuit.

According to some aspects of the present disclosure, there is provided a method a method of supplying bleed air from a compressor section of an aircraft engine to an environmental control system (ECS) of an aircraft, the method comprising using engine oil as a coolant to cool down a flow of bleed air drawn from the compressor section of the aircraft engine to obtain pre-cooled air; and then ducting the pre-cooled air through an airframe structure of the aircraft and to the ECS.

The method described above may include any of the following features, in any combination.

In some embodiments, the pre-cooled air is obtained by circulating the bleed air drawn from the compressor section through a pre-cooler installed within a nacelle of the aircraft engine.

In some embodiments, the pre-cooler is an oil-cooled air cooler, and the method comprises directing the bleed air from the compressor section of the aircraft engine to the oil-cooled air cooler and then through ducting extending through the airframe structure of the aircraft.

In some embodiments, the airframe structure is an aircraft wing, and directing the bleed air through the ducting comprises directing the pre-cooled air from the oil-cooled air cooler through the aircraft wing.

Still according to some embodiments, the method comprises cooling the engine oil prior to directing the engine oil to the pre-cooler.

In some embodiments, the engine oil is passed through an air-cooled oil cooler upstream of the pre-cooler.

In some embodiments, the engine oil is directed from an engine component to the air-cooled oil cooler and then to the air-precooler to pre-cool the bleed air prior to entering the airframe structure of the aircraft.

Still according to some embodiments, the method comprises circulating ambient air through the air-cooled oil cooler.

From the foregoing, it can be appreciated that the oil system of the engine and the air system of the aircraft can be intrinsically linked to solve an aircraft requirement (i.e., the need for pre-cooling the air prior to direct it to the ECS). Applicant is thus suggesting to use the engine to solve an aircraft requirement. The integration of the engine oil system and the aircraft air system allows to eliminate the need for a dedicated coolant for pre-cooling the air supplied to the ECS of the aircraft. According to some aspects, it provides for a better integration of wing-mounted aircraft engines by allowing bleed air to be safely routed through the aircraft wings to the ECS of the aircraft.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A system for feeding pre-cooled air to an environmental control system (ECS) (28) of an aircraft (10), the system comprising:
an aircraft engine (16) comprising:
a compressor section (20) having a bleed port; and
an engine oil circuit including an oil cooler (25) for cooling engine oil; and
an air pre-cooler (34) including an air passage (38) in heat exchange relationship with a coolant passage (36), the air passage (38) having an air inlet (38a) fluidly connected to the bleed port of the compressor section (20) of the aircraft engine (16) and an air outlet (38b) fluidly connectable to an inlet (32) of an ECS (28), the coolant passage (36) having a coolant inlet (36a) fluidly connected to an oil outlet of the oil cooler (25) and a coolant outlet (36b) fluidly connected to the engine oil circuit at a location upstream of the oil cooler (25).

2. The system as defined in claim 1, wherein the coolant passage (36) of the air pre-cooler (34) is disposed downstream of the oil cooler (25) of the aircraft engine (16) relative to a flow of the engine oil through the engine oil circuit.

3. The system as defined in claim 1 or 2, wherein the aircraft engine (16) is installed inside an engine nacelle (18), and the air pre-cooler (34) is disposed inside the engine nacelle (18) and, optionally, wherein the air pre-cooler (34) is mounted to the aircraft engine (16) .

4. The system as defined in claim 3, wherein the oil cooler (25) is an air-cooled oil cooler (ACOC) having an air passage (27) fluidly connected to an air intake (31a) defined in the engine nacelle (18) for receiving a flow of ambient air.

5. An aircraft (10) comprising:
the system according to any preceding claim;
a fuselage (12) and wings (14) extending from opposed sides of the fuselage (12);
one or more aircraft engines (16) mounted to the wings (14), the one or more aircraft engines (16) including the aircraft engine (16) of the system mounted to a first wing of the wings (14); and
an environmental control system (ECS) (28) fluidly connected to the bleed port via ducting (32) extending through the first wing (14) of the aircraft (10), the air passage (38) of the air pre-cooler (34) fluidly connected to the ducting (32) in the first wing (14) of the aircraft (10)..

6. The aircraft (10) as defined in claim 5, wherein the air pre-cooler (34) is mounted to a casing of the aircraft engine (16) of the system.

7. The aircraft (10) as defined in claim 5 or 6, wherein a fuel tank (26) is disposed at least in part in the first wing (14), the ducting (32) disposed in front of the fuel tank (26) inside the first wing (14).

8. The aircraft (10) as defined in any of claims 5 to 7, wherein the ducting (32) is disposed in a leading edge region of the first wing (14).

9. A method of supplying bleed air from a compressor section (20) of an aircraft engine (16) to an environmental control system (ECS) (28) of an aircraft (10), the method comprising:
using engine oil as a coolant to cool down the bleed air drawn from the compressor section (20) of the aircraft engine (16) to obtain pre-cooled air; and then
ducting the pre-cooled air through an airframe structure of the aircraft (10) and to the ECS (28).

10. The method as defined in claim 9, wherein the pre-cooled air is obtained by circulating the bleed air drawn from the compressor section (20) through a pre-cooler (34) installed within a nacelle (18) of the aircraft engine (16).

11. The method as defined in claim 10, wherein the pre-cooler (34) is an oil-cooled air cooler, and the method comprises directing the bleed air from the compressor section (20) of the aircraft engine (16) to the oil-cooled air cooler (34) and then through ducting (32) extending through the airframe structure of the aircraft (10).

12. The method as defined in claim 11, wherein the airframe structure is an aircraft wing (14), and the directing the bleed air through the ducting (32) comprises directing the pre-cooled air from the oil-cooled air cooler (34) through the aircraft wing (14).

13. The method as defined in any of claims 10 to 12, comprising cooling the engine oil prior to directing the engine oil to the pre-cooler (34).

14. The method as defined in claim 13, wherein the cooling the engine oil prior to directing the engine oil to the pre-cooler (34) comprises passing the engine oil through an air-cooled oil cooler (25) upstream of the pre-cooler (34).

15. The method as defined in claim 14, comprising directing the engine oil from an engine component to the air-cooled oil cooler (25).
